# EUROPEAN PATENT APPLICATION

(11) **EP 0 999 711 A2**
(43) Date of publication of application: **10.05.2000**
(21) Application number: 99121788.6
(22) Date of filing: 03.11.1999
(51) Int. Cl.: H04N 9/804

(54) **Innovating audio-video decoder**

(30) Priority: 06.11.1998 IT BA980041
(71) Applicant: Mediagroup Srl, 70033 Corato (BA) (IT)
(72) Inventor: Cataldo, Falco, 70033 CORATO (IT)

(57) **Abstract**

Innovating audio-video decoder that reads DVD (Digital Video Disc) media, masterized with known and economic techniques, simply connecting it to a standard TV set without special and expensive devices, like DVD Video or computers.

The invention allows to spread the use of DVD media in hobby, industrial and professional markets other than film industry. In fact, the innovating decoder allows to use masterization techniques already employed for CD ROM and DVD ROM, because sound and picture are digitalized and processed like a simple data file without using a computer to read and visualize them. Therefore, the invention can be considered an intermediate product between a DVD Video and a computer, being a single stand alone device unit that could be placed under a TV set.

## Description

### Technical field

The present invention relates to an innovating audio-video decoder that reads DVD (Digital Video Disc) media, masterized with known and economic techniques, simply connecting it to a standard TV set without special and expensive devices, like DVD Video or computers.

The very expensive decoding systems DVD Video on the market use only Digital Video Disc media and are processed by special softwares; these software are limited to 5 languages and 32 subtitles and audio is compressed by means of very complex and professional programs, like dolby AC3 surround. Such DVD media are produced by the film industries only, which, thanks to very expensive and complex technologies, can limit the possible illegal reproductions of DVD media. To this aim, the whole planet Earth has been divided into six macroregions, each of them with a different cryptic code that prevents any exchange of DVD media among the regions.

### Disclosure of the invention

The present invention solves the above mentioned problems and allows to spread the use of DVD media in hobby, professional and industrial markets other than film industry. In fact, the innovating decoder allows to use masterization techniques already employed for CD ROM and DVD ROM, because sound and picture are digitalized and processed like a simple data file without using a computer to read and visualize them. In fact, as a data file, DVD media can be masterized and processed/read like a DVD ROM.

Therefore, the invention can be considered an intermediate product between a DVD Video and a computer; it is a stand alone device to be placed under a TV set.

These and other advantages will be pointed out in the detailed description of the invention that will refer to the figures of the tables 1/2 and 2/2 in which a preferred scheme is shown in the front (Fig. 1), in the rear view (Fig. 2) and in the internal structure of its components (Fig. 3). Both are exemplifying and not restrictive.

### Way of carrying out the invention

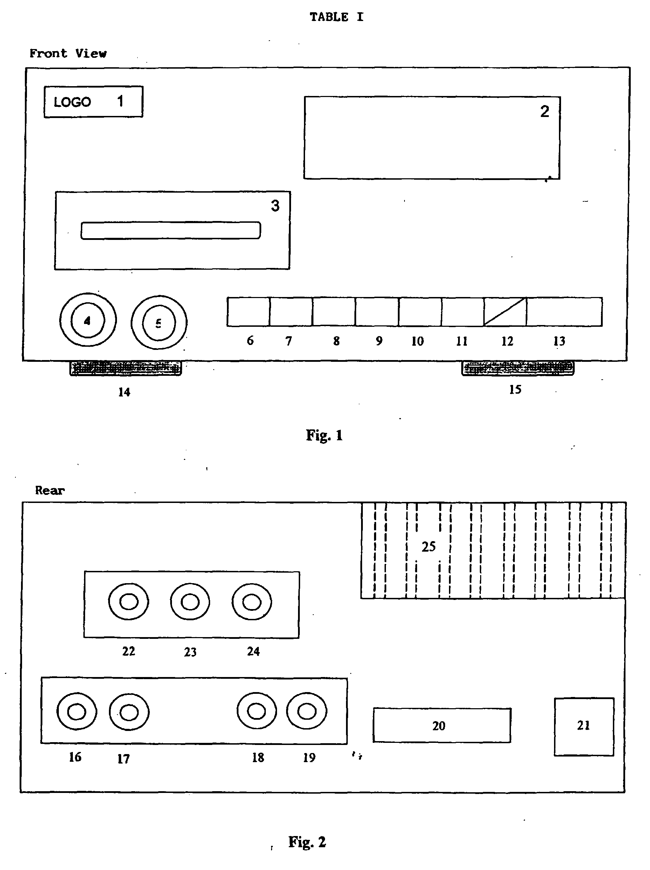

With reference to Fig. 1 of table 1/2 an examplifying, preferred but not restrictive scheme of the decoder front view is represented: liquid crystal display (2), DVD ROM and/or CD ROM player (3), headphone plug (4), potentiometer for volume level control (5), DVD ROM and/or CD ROM eject key (6), fast search (7) and file search keys (8), start key (9), per-file (10) and fast forward keys (11), stop and/or pause keys (12) and power button (13).

With reference to Fig. 2 of table 1/2 an exemplifying, preferred but not restrictive, scheme of the decoder rear view is represented: left (16) and right (17) RCA audio connectors, RCA composite video connector (18), 4-pole Mini DIN connector for S-VHS video (19), audio and video SCART plug (20), voltage (110/220 V 50-60 Hz) input (21), BNC-Y output for video components (22), BNC B-Y output for components (23), BNC R-Y output for components (24), air-cooling inlets (25). According to a preferred and not restricted embodiment, the decoder shape is almost rectangular with or without rounded edges. Of course, every other suitable shape is possible.

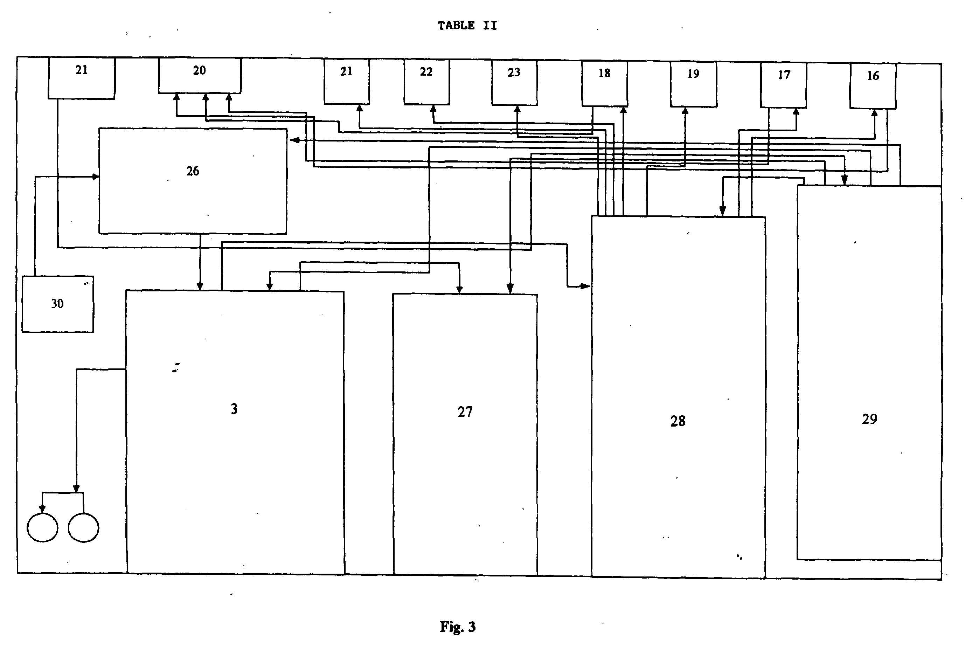

With reference to Fig. 3 of table 2/2 an exemplifying, preferred but not restrictive, scheme of the decoder internal structure (with its components lay-out) is represented: voltage input (21), SCART plug (20), BNC service devices (21, 22, 23), left and right RCA audio connector (16, 17), RCA connector for composite video (18), Mini DIN S-VHS output (19), EPROM card with a control software for all the devices (26), DVD ROM and/or CD ROM player (3), audio decoder, said file.wave (27), audio/video decoder, said file.MPEG2 (28), 12V feeding card (29), a chip (30) that electronically transmits the signals from the keys and/or from remote control to the EPROM card, which manages the whole device. Of course, a particular embodiment in which all the components and devices are integrated in a single motherboard is also possible.

The invention, described in such an exemplifying, preferred and not restrictive form, allows to read every DVD ROM and/or CD ROM, which are written and compressed by means of the well known and worldwide standardised file.wave e file.MPEG2 softwares, with a simple connection to a TV set or stereo set, without using a computer. In fact, the invention comprises all the needed functions in a single stand alone device.

## Claims

1. Innovating audio-video decoder characterized by the fact that it is able to decode masterized DVD media both in file.wave and in file.MPEG2 format and to visualize all the signals by means of a standard TV set or stereo set.

2. Audio-video decoder according to claim 1, characterized by the fact that all its components are inside a single device that is easy to transport and use.

3. Audio-video decoder according to claim 1 or 2, characterized by the fact that all its components and devices are integrated in a single motherboard.

4. Audio-video decoder according to claim 1 or 2, characterized by the fact that, due to the functions it can perform, the invention can be considered an intermediate product between a DVD Video and a computer, being a single stand alone device.

5. Audio-video decoder according to one of the previous claims, characterised by the fact that its shape is almost rectangular, with or without rounded edges; every other suitable shape is possible.

6. Audio-video decoder according to one of the previous claims, characterised by the fact that it can read digital audio-video discs in compressed file.MPEG2 format and/or digital audio discs in file.wave format; being these discs easily masterized with standard CD ROM and DVD ROM techniques.
